# EUROPÄISCHE PATENTSCHRIFT

(11) **EP 1 629 581 B1**
(45) Veröffentlichungstag und Bekanntmachung des Hinweises auf die Patenterteilung: **06.07.2011**
(21) Anmeldenummer: 04738494.6
(22) Anmeldetag: 03.05.2004
(51) Int. Cl.: H02B 13/035

(54) **TRENNSCHALTERANORDNUNG**
DISCONNECTING SWITCH ASSEMBLY
SYSTEME DE DISJONCTEURS

(30) Priorität: 02.06.2003 DE 10325683
(43) Veröffentlichungstag der Anmeldung: 01.03.2006
(73) Patentinhaber: SIEMENS AKTIENGESELLSCHAFT, 80333 München (DE)
(72) Erfinder: MEINHERZ, Manfred, 13467 Berlin (DE); WAGNER, Eckard, 13585 Berlin (DE)
(86) Internationale Anmeldenummer: PCT/DE2004/000966
(87) Internationale Veröffentlichungsnummer: WO 2004/109878

(56) Entgegenhaltungen:
- EP-A- 0 829 937
- WO-A-00/45486
- DE-A1- 10 011 888
- DE-A1- 19 908 304

## Beschreibung

Die Erfindung betrifft eine Trennschalteranordnung zum Trennen luftisolierter elektrischer Leitungen.

Trennschalteranordnungen sind beispielsweise aus der DE 198 39 535 A1 bekannt. Die dort offenbarte Trennschalteranordnung weist luftisolierte Trennschalter mit zwei Schwenkarmen auf, wobei die Schwenkarme mit endseitigen Schaltkontakten versehen sind. In einer Kontaktstellung liegen die Schaltkontakte an Aufnahmekontakten stromführender Leitungen oder Sammelschienen an. Durch Einleiten einer Schwenkbewegung werden die Schwenkarme von den Aufnahmekontakten getrennt, so dass die Leitungen unterbrochen sind. Lufisölierte Trennschalteranordnungen sind auf Grund der in Luft einzuhaltenden Mindestabstände raumgreifend. Darüber hinaus sind die Kontakte der Trennschalter Witterungseinflüssen ausgesetzt, durch welche diese nachteilig beeinflusst werden.

Weiterhin sind separat aufgesellte schutzgasisolierte Trennschalter bekannt.

Aus der US 4,440,996 ist eine gasisolierte Schaltanlage offenbart, die ein metallisches im Querschnitt Y-förmiges Gehäuse auf Erdpotential aufweist. Das Gehäuse bildet Anschlussstutzen zum gasdichten Aufsetzen von Freiluftdurchführungen aus. In den Freiluftdurchführungen ist ein Leistungsschalter angeordnet, der einen ortsfesten Kontakt sowie einen diesbezüglich beweglich geführten Bewegkontakt aufweist. Zum Löschen eines beim Trennen der Kontakte des Leistungsschalters gezogenen Lichtbogens wird der Lichtbogen mit einem Löschgas beblasen.

Die US 6,459,562 B2 offenbart eine Schaltanlage mit einem metallischen Gehäuse auf Erdpotential, das gasdicht mit Freiluftdurchführungen verbunden ist. Innerhalb einer der Freiluftdurchführungen ist ein Leistungsschalter vorgesehen, wohingegen ein oder zwei Trennschalter in dem metallischen Gehäuse angeordnet sind.

Die EP 1 207 601 A2 offenbart eine Schaltanlage mit einem isoliert aufgestellten metallischen Gehäuse, an dem aus Isolierstoff gefertigte Hohlzylinder befestigt sind. In den Hohlzylindern sind sowohl Trenn- als auch Leistungsschalter angeordnet. Das metallische Gehäuse befindet sich auf einem Hochspannungspotential. Die isolierte Aufstellung des Ge-häuses erfolgt durch einen aus Isolierstoff gefertigten Hohlzylinder, der sich an einem geerdeten Fundament abstützt. Durch den tragenden Hohlzylinder erstrecken sich Isolierstangen, die eine von einer geerdeten Antriebseinheit erzeugte Antriebsbewegung in das metallische Gehäuse auf Hochspannungspotential einleiten.

Die EP 1 174 968 A1 offenbart eine Hochspannungsschaltanlage, die über eine gasisolierte Sammelschiene, ein gasisoliertes metallisches Gehäuse auf Erdpotential sowie über eine gas-dicht mit dem Gehäuse verbundene Freiluftdurchführung zum Anschluss eines luftisolierten Hochspannungskabels verfügt. In der Freiluftdurchführung ist ein Leistungsschalter zum Unterbrechen eines Stromflusses vorgesehen. In dem gasisolierten Gehäuse hingegen ist wenigstens ein Trennschalter vorgesehen, der nach der Stromunterbrechung stromlos öffnet, um eine ausreichend große Trennstrecke und daher eine dauerhafte Unterbrechung des Stromflusses durch die Schaltanlage bereitzustellen.

Die DE 296 20 438 U1 offenbart einen Kapselungsgehäuse für eine gasisolierte Schaltanlage. An das Kapselungsgehäuse ist ein Schalterantriebsgehäuse angeformt, das zur Aufnahme wenigstens einer Antriebswelle vorgesehen ist.

Die JP 5453237 A offenbart eine Schaltanlage, die ein auf Erdpotential befindliches metallisches Gehäuse aufweist, in dem ein Leistungsschalter angeordnet ist. An das metallische Gehäuse sind Anschlussstutzen angeformt, an denen jeweils eine Freiluftdurchführung gasdicht befestigt ist. In der Freiluftdurchführung sind Trennschalter vorgesehen. Dabei sind die Freiluftdurchführüngen aus einem hohlzylindrischen Keramikrohr sowie einem das Keramikrohr verlängernden Zwischengehäuse zusammengesetzt. Das Zwischengehäuse ist zur Aufnahme und Lagerung des Antriebs der Trennschalter eingerichtet.

Aufgabe der Erfindung ist es, eine kompakte Trennschalteranordnung bereitzustellen, die zur Realisierung einer Vielzahl von elektrischen Schaltungen insbesondere bei Hochspannungen einsetzbar ist.

Die Erfindung löst diese Aufgabe durch eine Trennsehalteranordnung zum Trennen luftisolierter elektrischer Leitungen, die eine oder mehrere Phasen aufweisen, mit wenigstens einem geerdeten und mit Schutzgas befüllten Gehäuse, mit gasdicht an dem oder den Gehäusen befestigten Freiluftdurchführungen, die jeweils einen Freiluftanschluss zum Anschluss der Leitungen aufweisen, und mit gasisolierten Trennschaltern, die in den Freiluftdurchführungen angeordnet sind, wobei für jede Phase wenigstens drei Freiluftdurchführungen vorgesehen sind, deren Freiluftanschlüsse über ein in einem der Gehäuse angeordnetes Strombahnstück mittels der Trennschalter elektrisch miteinander verbindbar sind, und wobei jede Freiluftdurchführung einen Trennschalter aufweist.

Durch die erfindungsgemäße Trennschalteranordnung können die Trennschalter einer Freiluftschaltanlage zu einer schutzgasisolierten und somit kompakten Baugruppe zusammengefasst werden. Die Trennschalter werden nicht mehr als Einzelgeräte mit Einzelfundamenten aufgestellt sondern weisen entweder ein einziges Gehäuse oder für jede Phase ein separates Gehäuse auf, das auf nur einem Gestell mit einem einzigen Fundament aufgestellt werden kann. Dabei ist die erfindungsgemäße Trennschalteranordnung für eine Vielzahl von Schaltplananwendungen geeignet. Nur beispielsweise sei die Anbindung einer Doppelsammelschiene eines Drehstromnetzes an einen Transformatorzweig oder die Verbindung zweier Netzzweige in einer sogenannten H-Schaltung genannt. Im Gegensatz zu vorbekannten luftisolierten Trennschalteranordnung weist die erfindungsgemäße Trennschalterordnung darüber hinaus eine kompakte Bauform auf.

Bei einer bevorzugten Weiterentwicklung der Erfindung sind die einer Phase zugeordneten Freiluftdurchführungen in einer Ebene fächerförmig angeordnet. Dabei spannen alle Paare benachbarter Freiluftdurchführungen einer Phase in ihrer Längserstreckung bezüglich des Strombahnstücks den gleichen Winkel auf. Die endseitig der Freiluftdurchführungen angeordneten Freiluftanschlüsse weisen daher zueinander den größtmöglichen Abstand auf. Aus diesem Grunde können die Freiluftdurchführungen in ihrer Länge entsprechend kürzer bemessen werden, ohne dass Spannüberschläge zwischen den Freiluftanschlüssen zu befürchten sind. Dies ermöglicht eine noch kompaktere Bauform der Trennschalteranordnung.

Bei einer diesbezüglichen Weiterentwicklung verlaufen die Freiluftdurchführungen, die einer Phase zugeordnet sind, in jeweils in einer Ebene, wobei die Ebenen der verschiedenen Phasen parallel zueinander ausgerichtet sind.

Zweckmäßigerweise sind aus Isolierstoff bestehende Stützer zum Halten des oder der Strombahnstücke in dem oder den Gehäusen vorgesehen. Die aus einem nicht leitenden Kunststoff oder einer Keramik oder beispielsweise aus Gießharz hergestellten Stützer stellen eine isolierende Halterung für das im Betriebzustand beispielsweise ein Hochspannungspotential aufweisende Strombahnstück an dem geerdeten ein- oder mehrpolig kapselnden Gehäuse bereit.

Vorteilhafterweise ist für jede Phase ein Erdungsschalter vorgesehen. Der Erdungsschalter kann alle getriebeseitigen Kontaktstücke der Trennschalter und das Strombahnstück einer Phase gleichzeitig erden und beispielsweise in dem dreipolig oder einpolig kapselnden Gehäuse angeordnet sein.

Vorteilhafterweise ist der Erdungsschalter in der Freiluftdurchführung angeordnet. Auf diese Weise kann auf das Vorsehen von Lagerungen für den Erdungsschalter in dem Gehäuse verzichtet werden.

Vorteilhafterweise ist jeder Trennschalter mittels aus Isolierstoff bestehenden Haltemitteln in der Freiluftdurchführung gehalten. Die Haltemittel sorgen für einen von dem Strombahnstück unabhängigen Halt des Trennschalters in der Freiluftdurchführung. Auf diese Weise kann die Freiluftdurchführung als unabhängiges Bauteil zusammen mit dem Trennschalter hergestellt und vor Ort mit dem jeweiligen Gehäuse sowie dem jeweiligen Strombahnstück beispielsweise über einen zweckmäßigen Steckkontakt verbunden werden. Durch den Steckkontakt oder eine sonstige Anbindung des Trennschalters an das zugeordnete Strombahnstück wird eine zusätzliche Halterung des Trennschalters bereitgestellt und die Stabilität des Trennschalters erhöht.

Vorteilhafterweise sind die Haltemittel gasdicht. Als gasdichtes Haltemittel kommt beispielsweise eine Schottdurchführung in Betracht, die einen in der Freiluftdurchführung ausgebildeten Trennergasraum begrenzt. Dabei durchgreift ein elektrisch mit dem Trennschalter verbundener Verbindungsleiter die Schottdurchführung mittig und ist über zweckmäßige Dichtungsmittel gasdicht mit der Schottdurchführung verbunden. Der Trennergasraum bildet somit einen vom Sammelschienenraum des Gehäuses unabhängigen Trennergasraum aus, der beispielsweise mit einem unterschiedlichen Gas befüllbar oder mit einem unterschiedlichen Druck beaufschlagbar ist.

Abweichend davon sind die Haltemittel gasdurchlässig, so dass ein aus Trennergasraum sowie Sammelschienenraum zusammengesetzter gemeinsamer Gasraum ausgebildet ist, der durch einen gemeinsamen Dichtheitstest auf Undichtigkeiten überprüfbar ist.

Vorteilhafterweise weist der Trennschalter einander stirnseitig gegenüber liegende Kontaktstücke auf, wobei der Trennschalter durch Einleiten einer Hubbewegung von einer den Stromfluss ermöglichenden Kontaktstellung in eine Trennstellung überführbar ist, in der eine elektrisch isolierende Trennstrecke zwischen den Kontaktstücken bereitgestellt ist. Gemäß dieser zweckmäßigen Weiterentwicklung der Erfindung ist der Trennschalter in seiner Ausgestaltung weitestgehend an einen sich in einer axialen Richtung erstreckenden homogenen zylindrischen Leiter angeglichen, so dass auf Erfahrungen mit herkömmlichen Freiluftdurchführungen die in ihrem Inneren keinen Trennschalter aufweisen, zurückgegriffen werden kann. Dies gilt sowohl für deren Bemessung, als auch für das verwendete Material.

Zweckmäßigerweise weist der Trennschalter einen ortsfesten Einfahrkontakt sowie einen über eine hohle Verbindungsstange fest an Befestigungsmitteln der Freiluftdurchführung abgestützten Gleitkontakt auf, wobei ein von dem Gleitkontakt beweglich geführter Schaltstift zum Kontaktieren des Einfahrkontaktes vorgesehen ist, der über in dem Verbindungsleiter angeordnete Antriebsmittel angetrieben ist. Die in dem hohlen Verbindungsleiter angeordneten Antriebsmittel, beispielsweise Koppelstangen, Schwenkhebel oder dergleichen, sind durch diesen gekapselt, so dass Spannungsspitzen an Ecken und Kanten der Antriebsmittel auch während einer Antriebsbewegung und somit Teilentladungen vermieden sind. Darüber hinaus weist der Trennschalter zwei feststehende Kontaktstücke auf, die auf einfache Art und Weise gehalten werden können. Eine aufwendige bewegliche Lagerung eines Kontaktstücks an den Befestigungsmitteln ist somit vermieden.

Bei einer weiteren zweckmäßigen Ausgestaltung der Erfindung ist wenigstens eine Antriebswelle zum Einleiten einer Antriebsbewegung in den Trennschalter vorgesehen. Dabei ist jede Antriebswelle mittels eines zweckmäßigen Drehlagers in den Befestigungsmitteln der Freiluftdurchführung gelagert, wobei zweckmäßige Dichtungsmittel für eine gasdichte Durchführung der Antriebswelle beispielsweise durch die Außenwandung der Befestigungsmittel sorgen. Selbstverständlich kann die Antriebswelle auch gasdicht in dem Gehäuse gelagert sein. Die Antriebsbewegung kann gemäß dieser Ausführungsform der Erfindung über eine Drehbewegung in das bei Betrieb gasisolierte Innere der Freiluftdurchführung eingeleitet werden.

Gemäß einer zweckmäßigen Weiterentwicklung der Erfindung ist eine aus einem Isolierstoff bestehende Isolierschwinge zum Einleiten einer Antriebsbewegung vorgesehen. Die Isolierschwinge ist mechanisch beispielsweise mit einer Koppelstange verbunden, die an ihrem von der Isolierschwinge abgewandten Ende einen Schaltstift ausbildet, der in einer Kontaktstellung des Trennschalters die leitende Verbindung zwischen dessen Kontaktstücken herstellt. Die Isolierschwinge wandelt eine Drehbewegung als Antriebsbewegung in eine lineare Bewegung oder Hubbewegung um und leitet eine translatorische Bewegung in den Trennschalter ein, wobei dieser entsprechend als Schubschalter ausgestaltet ist.

Zweckmäßigerweise sind Feldsteuerelementen zur Vermeidung von Teilentladungen in der Freiluftdurchführung vorgesehen.

Weiterhin kann ein Anzeigeelement zur Anzeige der Stellung des Trennschalters und/oder des Erdungsschalters vorteilhaft sein.

Vorteilhafterweise ist wenigstens eine Freiluftdurchführung mit einem Stromwandler ausgerüstet. Der Stromwandler ist sekundärseitig mit dem geerdeten Gehäuse verbunden und kann als Überstromwandler ausgebildet sein, so dass ein Öffnen des gemeinsamen oder der separaten Gasräume bei einem notwendig gewordenen Austausch des Überstromwandlers entfällt. Vorteilhafterweise ist wenigstens eine an der Freiluftdurchführung abgestützte Antriebseinheit zur Erzeugung einer Antriebsbewegung vorgesehen. Auf diese Weise kann die Freiluftdurchführung als funktionsfertiges Einzelbauteil unabhängig von dem Gehäuse hergestellt werden.

Zweckmäßigerweise weist die erfindungsgemäße Trennschalteranordnung einen Spannungswandler auf. Der Spannungswandler kann beispielsweise an dem Gehäuse befestigt sein.

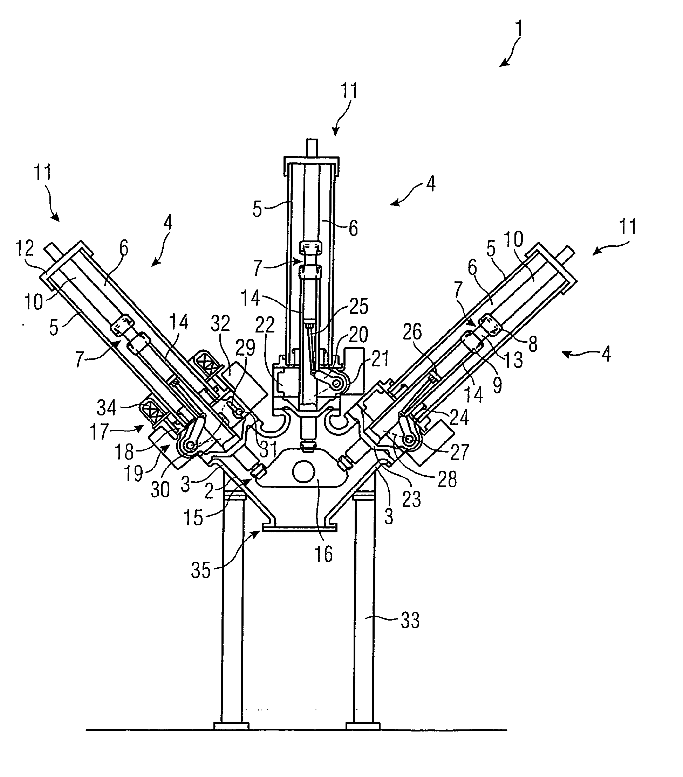

Weitere zweckmäßige Ausgestaltungen und Vorteile der Erfindung sind Gegenstand der nachfolgenden Beschreibung von Ausführungsbeispielen der Erfindung unter Bezug auf die Figur der Zeichnung, wobei
- Figur 1: ein Ausführungsbeispiel der gasisolierten Trenn- schalteranordnung in einer geschnittenen Seitenan- sicht zeigt.

Figur 1 zeigt ein Ausführungsbeispiel der erfindungsgemäßen gasisolierten Trennschalteranordnung 1 in einer geschnittenen Seitenansicht. Die gezeigte Trennschalteranordnung 1 weist ein auf Erdpotential liegendes Gehäuse 2 mit drei Anschlussstutzen 3 auf, die jeweils zur gasdichten Anbindung einer Freiluftdurchführungen 4 eingerichtet sind. In Figur 1 sind lediglich drei fächerartig in einer Ebenen angeordnete Frei luftdurchführungen 4 erkennbar. Diese drei Freiluftdurchführungen 4 sind einer Phase eines dreiphasigen Drehstromnetzes zugeordnet. Die restlichen Freiluftdurchführungen 4 der andern Phasen sind in die Zeichenebene der Figur 1 hinein versetzt und jeweils fluchtend zu einem der gezeigten Freiluftdurchführungen 4 angeordnet. Insgesamt sind neun Freiluftdurchführungen 4 an dem Gehäuse 2 befestigt.

Die Freiluftdurchführung 4 weist einen hohlzylindrisch ausgestalteten Isolator 5 mit einem Hohlraum 6 zur Aufnahme eines Trennschalters 7 auf. Der Trennschalter 7 besteht aus einem feststehenden Einfahrkontakt 8 sowie einem ebenfalls feststehenden Gleitkontakt 9, wobei der Einfahrkontakt 8 über eine Kontaktstange 10 mit einem Freiluftanschluss 11 zum Anschluss einer nicht gezeigten luftisolierten Hochspannungsleitung verbunden ist. Der Freiluftanschluss 11 ist endseitig am Isolator 5 angeordnet und weist eine Verschlusskappe 12 auf, die über Klebmittel gasdicht mit dem Isolator 5 verbunden ist und den Hohlraum 6 gasdicht verschließt.

In dem Gleitkontakt 8 ist ein Schaltstift 13 beweglich geführt, wobei der Gleitkontakt 9 über einen hohlen Verbindungsleiter 14 sowie über einen Steckkontakt 15 elektrisch mit einem in dem Gehäuse 2 angeordneten Strombahnstück 16 verbunden ist. Zur Halterung des Strombahnstücks 16 an dem Gehäuse 2 sind isolierende Stützer vorgesehen, die in
nicht dargestellt sind.

Das Strombahnstück 16 stellt eine elektrische Verbindung zwischen den Gleitkontakten 9 einer Phase her. Mit anderen Worten bilden die Kontaktstangen 10, die Einfahrkontakte 8, die Schaltstifte 13, die Gleitkontakte 9, die Verbindungsleiter 14, die Steckkontakte 19 und das Strombahnstück 16 in einer Kontaktstellung aller Trennschalter 7, in der der Schaltstift 13 in den Einfahrkontakt 8 eingefahren ist, eine leitende Verbindung zwischen allen Freiluftanschlüssen 11 einer Phase her.

An dem vom Freiluftanschluss 11 abgewandten Ende des Isolators 5 weist jede Freiluftdurchführung 4 Befestigungsmittel 17 auf, die aus einem metallischen Material, wie beispielsweise Aluminium, hergestellt sind und einen Flanschabschnitt 18, der mit dem Isolator 5 verklebt ist, und ein Zwischengehäuse 19 umfassen. Die Befestigungsmittel 17 sind in ihrem Innern ebenfalls rohrförmig ausgestaltet und weisen einen geraden Verlauf in Richtung der Längserstreckung des Isolators 5 auf. Jedes Zwischengehäuse 19 ist über eine Flanschverbindung fest mit einem Anschlussstutzen 3 verschraubt, wobei nicht erkennbare Dichtungsmittel für eine gasdichte Anbindung der Freiluftdurchführung 4 an das Gehäuse 2 sorgen.

Zum Einleiten einer Schaltbewegung in den Schaltstift 13 ist eine in dem Zwischengehäuse 19 angeordnete elektrisch nichtleitende Isolierschwinge 20 vorgesehen, wobei seitliche Haltekappen 21 zum gasdichten Verschluss eines von dem Zwischengehäuse 19 begrenzten Zwischenhohlraumes 22 vorgesehen sind. Der Zwischenhohlraum 22 vergrößert den Hohlraum 6.

Zum Halten des Gleitkontaktes 9 über den Verbindungsleiter 14 ist eine gasdichte Schottdurchführung 23 als Haltemittel oder Halterung vorgesehen, die zwischen dem Zwischengehäuse 19 sowie dem geerdeten Anschlussstutzen 3 fest montiert ist. Dabei durchragt die Verbindungsstange 14 die Schottdurchführung 23 mittig, wobei in Figur 1 nicht erkennbare Dichtungsmittel für eine gasdichte Anbindung der Verbindungsstange 14 an die Schottdurchführung 23 sorgen. Auf diese Weise ist durch den Hohlraum 6 ein separater und gasdichter Trennergasraum ausgebildet, der mit einem eigenen Lösch- oder Isoliergas, wie beispielsweise Schwefelhexafluorid, befüllbar ist. Das Gehäuse begrenzt im Betriebszustand in dem alle Freiluftdurchführungen montiert sind ebenfalls einen geschlossenen Gehäusegasraum, der ebenfalls mit einem üblichen Isoliergas befüllt ist.

Die Schottdurchführung 23 ist aus einem Isolierstoff, wie beispielsweise Gießharz, hergestellt.

Der Freiluftanschluss 11 ist zum Anschluss einer figürlich nicht dargestellten luftisolierten Hochspannungsleitung vorgesehen, wohingegen das Gehäuse 2 auf Erdpotential liegt. Um Spannungsspitzen aufgrund hoher elektrisch Feldstärken an Ecken und Kanten der Befestigungsmittel 17 zu vermeiden, sind Feldsteuerungselemente 24 vorgesehen, die elektrisch mit dem Befestigungsmitteln 17 sowie dem Gehäuse 2 verbunden sind.

Zum Übertragen der Antriebsbewegung von der Isolierschwinge 20 auf den Schaltstift 13 ist eine Koppelstange 25 vorgesehen, die an der Isolierschwinge 20 angelenkt ist und an ihrem von der Isolierschwinge 20 abgewandten Ende über eine Schaltstiftführung 26 fest mit dem Schaltstift 13 verbunden ist. Es ist erkennbar, dass der Schaltstift 13 sowie die Schaltstiftführung 26 innerhalb des hohlen Verbindungsleiters 14 angeordnet sind, der aus diesem Grunde neben einer rein elektrischen Verbindung als Führungsmittel dient. Um eine Bewegung der Isolierschwinge 20 zu ermöglichen, weist der Verbindungsleiter 14 eine der Isolierschwinge 20 gegenüberliegende seitliche Öffnung auf.

Die Isolierschwinge 20 ist ferner drehfest mit einer An-triebswelle 27 verbunden, die über ein zweckmäßiges mit Dichtungsmitteln ausgerüstetes Drehlager aus dem Zwischengehäuse 19 geführt ist. Durch Drehung der Antriebswelle 27 wird die Isolierschwinge 20 in eine in Figur 1 angedeutete Trennstellung 28 überführt, in welcher der Schaltstift 13 aus dem Einfahrkontakt 8 herausgeführt ist, so dass zwischen dem Einfahrkontakt 8 und dem Gleitkontakt 9 eine Trennstrecke bereitgestellt ist.

An der Haltekappe 21 und der Isolierschwinge 20 gegenüberliegend ist bei der links dargestellten Freiluftdurchführung 4 ein Erdungsschalter 29 erkennbar, der nach dem Öffnen des Trennschalters 7 zum Erden aller getriebeseitigen Kontaktstücke der Trennschalter 7 einer Phase vorgesehen ist. Dazu stellt der Erdungsschalter 29 eine leitende Verbindung zwischen einem auf dem Potential des Verbindungsleiters 14 liegenden Erdkontakt 30 sowie dem auf Erdpotential liegenden Gehäuse 2 her. Zum Antrieb des Erdungsschalters 29 ist eine aus dem Zwischengehäuse 19 herausgeführte Erderwelle 31 vorgesehen. Ferner ist ein an dem Zwischengehäuse 19 befestigter Antriebskasten 32 zur Unterbringung von Antriebseinheiten vorgesehen. Die Antriebseinheiten sind zur Erzeugung einer Antriebsbewegung für die Antriebswelle 21 und teilweise die Erderwelle 31 eingerichtet.

Das Gehäuse 2 und damit die gesamte Trennschalteranordnung ist über ein Traggestell 33 mit einem figürlich nicht dargestellten Fundament verbunden.

Die Freiluftdurchführung 4 ist ferner mit einem Überwurfstromwandler 34 ausgerüstet. Unterhalb des Gehäuses 2 ist ein Anschlussstutzen 35 zum Anschluss eines nicht dargestellten Spannungswandlers erkennbar.

## Patentansprüche

1. Trennschalteranordnung (1) zum Trennen luftisolierter elektrischer Leitungen, die eine oder mehrere Phasen aufweisen, mit wenigstens einem geerdeten und mit Schutzgas befüllten Gehäuse (2), mit gasdicht an dem oder den Gehäusen (2) befestigten Freiluftdurchführungen (4), die jeweils einen Freiluftanschluss (11) zum Anschluss der Leitungen aufweisen, und mit gasisolierten Trennschaltern (7), die in den Freiluftdurchführungen (4) angeordnet sind, wobei für jede Phase wenigstens drei Freiluftdurchführungen (4) vorgesehen sind, deren Freiluftanschlüsse (11) über ein in einem der Gehäuse (2) angeordnetes Strombahnstück (16) mittels der Trennschalter (7) elektrisch miteinander verbindbar sind und wobei jede Freiluftdurchführung (4) einen Trennschalter (7) aufweist.

2. Trennschalteranordnung nach Anspruch 1,
**dadurch gekennzeichnet, dass** die einer Phase zugeordneten Freiluftdurchführungen (4) in einer Ebene fächerförmig angeordnet sind.

3. Trennschalteranordnung (1) nach einem der vorhergehenden Ansprüche,
**dadurch gekennzeichnet, dass** aus Isolierstoff bestehende Stützer zum Halten des oder der Strombahnstücke (16) in dem oder den Gehäusen (2) vorgesehen sind.

4. Trennschalteranordnung (1) nach einem der vorhergehenden Ansprüche,
**dadurch gekennzeichnet, dass**
für jede Phase ein Erdungsschalter (29) vorgesehen ist.

5. Trennschalteranordnung (1) nach Anspruch 5,
**dadurch gekennzeichnet, dass** jeder Erdungsschalter (29) in einer Freiluftdurchführung (4) angeordnet ist.

6. Trennschalteranordnung (1) nach einem der vorhergehenden Ansprüche,
**dadurch gekennzeichnet, dass** jeder Trennschalter (7) mittels aus Isolierstoff bestehenden Haltemitteln (23) in der Freiluftdurchführung (4) gehalten ist.

7. Trennschalteranordnung (1) nach Anspruch 7,
**dadurch gekennzeichnet, dass** die Haltemittel (23) gasdicht sind.

8. Trennschalteranordnung (1) nach Anspruch 7,
**dadurch gekennzeichnet, dass** die Haltemittel gasdurchlässig sind.

9. Trennschalteranordnung (1) nach einem der vorhergehenden Ansprüche,
**dadurch gekennzeichnet, dass** der Trennschalter (7) einander stirnseitig gegenüberliegende Kontaktstücke (8, 9) aufweist, wobei der Trennschalter (7) durch Einleiten einer Hubbewegung von einer den Stromfluss ermöglichenden Kontaktstellung in eine Trennstellung überführbar ist, in der eine elektrisch isolierende Trennstrecke zwischen den Kontaktstücken (8, 9) bereitgestellt ist.

10. Trennschalteranordnung (1) nach Anspruch 10,
**dadurch gekennzeichnet, dass** der Trennschalter (7) einen ortsfesten Einfahrkontakt (8) sowie einen über eine hohle Verbindungsstange (14) fest an Befestigungsmitteln (17) der Freiluftdurchführung (4) abgestützten Gleitkontakt (9) aufweist, wobei ein von dem Gleitkontakt (9) beweglich geführter Schaltstift (13) zum Kontaktieren des Einfahrkontaktes (8) vorgesehen ist, der über in dem Verbindungsleiter (14) angeordnete Antriebsmittel (25, 26) angetrieben ist.

11. Trennschalteranordnung (1) nach einem der vorhergehenden Ansprüche,
**gekennzeichnet durch**
wenigstens eine Antriebswelle (21, 31) zum Einleiten einer Antriebsbewegung in den Trennschalter (7), wobei jede Antriebswelle (21, 31) in Befestigungsmitteln (17) der Freiluftdurchführung (4) gelagert ist.

12. Trennschalteranordnung (1) nach einem der vorhergehenden Ansprüche,
**gekennzeichnet durch**
eine aus einem Isolierstoff bestehende Isolierschwinge (20) zum Einleiten einer Antriebsbewegung in den Trennschalter (7).

13. Trennschalteranordnung (1) nach einem der vorhergehenden Ansprüche,
**gekennzeichnet durch** Feldsteuerungselemente (24) zum Vermeiden von Teilentladungen in der Freiluftdurchführung (4).

14. Trennschalteranordnung (1) nach einem der vorhergehenden Ansprüche,
**gekennzeichnet durch,**
ein Anzeigeelement zur Anzeige der Stellung des Trennschalters (7) und/oder des Erdungsschalters (29).

15. Trennschalteranordnung (1) nach einem der vorhergehenden Ansprüche,
**dadurch gekennzeichnet, dass** wenigstens eine Freiluftdurchführung (4) mit einem Stromwandler (34) ausgerüstet ist.

16. Trennschalteranordnung (1) nach einem der vorhergehenden Ansprüche,
**dadurch gekennzeichnet, dass** wenigstens eine an der Freiluftdurchführung (4) abgestützte Antriebseinheit (32) zur Erzeugung einer Antriebsbewegung vorgesehen ist.

17. Trennschalteranordnung (1) nach einem der vorhergehenden Ansprüche,
**gekennzeichnet durch**
einen Spannungswandler.

## Claims

1. Switch disconnector arrangement (1) for disconnection of air-insulated electrical lines which have one or more phases, having at least one grounded enclosure (2) which is filled with inert gas, having outdoor bushings (4) which are attached to the enclosure or enclosures (2) in a gas-tight manner and each have an outdoor connection (11) for connection of the lines, and having gas-insulated switch disconnectors (7) which are arranged in the outdoor bushings (4), with at least three outdoor bushings (4) being provided for each phase, whose outdoor connections (11) can be electrically connected to one another by means of the switch disconnectors (7) via a pole element (16) which is arranged in one of the enclosures (2), and with each outdoor bushing (4) having a switch disconnector (7).

2. Switch disconnector arrangement according to Claim 1,
**characterized in that**
the outdoor bushings (4) which are associated with one phase are arranged in the form of a fan on one plane.

3. Switch disconnector arrangement (1) according to one of the preceding claims,
**characterized in that**
posts, which are composed of dielectric material, are provided to hold the pole element or pieces (16) in the enclosure or enclosures (2).

4. Switch disconnector arrangement (1) according to one of the preceding claims,
**characterized in that**
a grounding switch (29) is provided for each phase.

5. Switch disconnector arrangement (1) according to Claim 4,
**characterized in that**
each grounding switch (29) is arranged in an outdoor bushing (4).

6. Switch disconnector arrangement (1) according to one of the preceding claims,
**characterized in that**
each switch disconnector (7) is held in the outdoor bushing (4) by means of holding means (23) which are composed of dielectric material.

7. Switch disconnector arrangement (1) according to Claim 6,
**characterized in that**
the holding means (23) are gas-tight.

8. Switch disconnector arrangement (1) according to Claim 7,
**characterized in that**
the holding means (23) are gas-permeable.

9. Switch disconnector arrangement (1) according to one of the preceding claims,
**characterized in that**
the switch disconnector (7) has contact pieces (8, 9) which are located opposite one another at the ends, in which case the switch disconnector (7) can be moved to a disconnected position by initiation of a linear movement from a contact position which allows current to flow, in which disconnected position an electrically isolating gap is provided between the contact pieces (8, 9).

10. Switch disconnector arrangement (1) according to Claim 9,
**characterized in that**
the switch disconnector (7) has a stationary female contact (8) and a sliding contact (9), which is firmly supported via a hollow connecting rod (14) on attachment means (17) for the outdoor bushing (4), with a switching pin (13), which is guided by the sliding contact (9) such that it can move, being provided for making contact with the female contact (8), and being driven via drive means (25, 26) which are arranged in the connecting conductor (14).

11. Switch disconnector arrangement (1) according to one of the preceding claims,
**characterized by**
at least one driveshaft (21, 31) in order to introduce a drive movement into the switch disconnector (7), with each driveshaft (21, 31) being mounted in attachment means (17) for the outdoor bushing (4).

12. Switch disconnector arrangement (1) according to one of the preceding claims,
**characterized by**
an isolating rocker (20), which is composed of a dielectric material, for introduction of a drive movement into the switch disconnector (7).

13. Switch disconnector arrangement (1) according to one of the preceding claims,
**characterized by**
field control elements (24) in order to prevent partial discharges in the outdoor bushing (4).

14. Switch disconnector arrangement (1) according to one of the preceding claims,
**characterized by**
a display element for indication of the position of the switch disconnector (7) and/or of the grounding switch (29).

15. Switch disconnector arrangement (1) according to one of the preceding claims,
**characterized in that**
at least one outdoor bushing (4) is equipped with a current transformer (34).

16. Switch disconnector arrangement (1) according to one of the preceding claims,
**characterized in that**
at least one drive unit (32) which is supported on the outdoor bushing (4) is provided in order to produce a drive movement.

17. Switch disconnector arrangement (1) according to one of the preceding claims,
**characterized by**
a voltage transformer.

## Revendications

1. Système ( 1 ) de sectionneur pour sectionner des lignes électriques isolées par de l'air, qui ont une phase ou plusieurs phases, comprenant au moins un boîtier ( 2 ) mise à la terre et rempli de gaz de protection, des traversées ( 4 ) vers l'extérieur qui sont fixées de manière étanche au gaz au boîtier ( 2 ) ou aux boîtiers ( 2 ) et qui ont respectivement une connexion ( 11 ) vers l'extérieur pour le raccordement des lignes, et des sectionneurs ( 7 ) isolés par du gaz qui sont disposés dans les traversées vers l'extérieur, dans lequel il est prévu pour chaque phase au moins trois traversées ( 4 ) vers l'extérieur dont les connexions ( 11 ), dont les connexions vers d'extérieur peuvent être reliées entre elles électriquement au moyen des sectionneurs ( 7 ) par une pièce ( 16 ) de voie de courant disposée dans l'un des boîtiers ( 2 ) et dans lequel chaque traversée ( 4 ) vers l'extérieur a un sectionneur ( 7 ).

2. Système de sectionneur suivant la revendication 1,
**caractérisé en ce que**
les traversées ( 4 ) vers l'extérieur associées à une phase sont disposées en éventail dans un plan.

3. Système ( 1 ) de sectionneur suivant l'une des revendications précédentes,
**caractérisé en ce que**
il est prévu des isolateurs en matière isolante pour maintenir la pièce ( 16 ) ou les pièces ( 16 ) de voie de courant dans le boîtier ( 2 ) ou dans les boîtiers ( 2 ).

4. Système ( 1 ) de sectionneur suivant l'une des revendications précédentes,
**caractérisé en ce qu'**il est prévu un interrupteur ( 29 ) de mise à la terre dans une traversée ( 4 ) vers l'extérieur.

5. Système ( 1 ) de sectionneur suivant la revendication 4,
**caractérisé en ce que** chaque interrupteur ( 29 ) de mise à la terre est disposé dans une traversée ( 4 ) vers l'extérieur.

6. Système ( 1 ) de sectionneur suivant l'une des revendications précédentes,
**caractérisé en ce que** chaque sectionneur ( 7 ) est maintenu dans la traversée ( 4 ) vers l'extérieur à l'aide de moyens ( 23 ) de maintien en matière isolante.

7. Système ( 1 ) de sectionneur suivant la revendication 6,
**caractérisé en ce que** les moyens ( 23 ) de maintien sont étanches au gaz.

8. Système ( 1 ) de sectionneur suivant la revendication 7,
**caractérisé en ce que** les moyens de maintien sont perméables au gaz.

9. Système ( 1 ) de sectionneur suivant l'une des revendications précédentes,
**caractérisé en ce que** le sectionneur ( 7 ) a des pièces ( 8, 9 ) de contact opposées l'une à l'autre du côté frontal, le sectionneur ( 7 ) pouvant, en lui donnant une course, de passer d'une position de contact, permettant le flux de courant, à une position de coupure, dans laquelle une section de coupure isolante électriquement est ménagée entre les pièces ( 8, 9 ) de contact.

10. Système ( 1 ) de sectionneur suivant l'une des revendications précédentes,
**caractérisé en ce que** le sectionneur ( 7 ) a un contact ( 8 ) d'entrée fixe en position, ainsi qu'un contact ( 9 ) glissant appuyé, par une barre ( 14 ) creuse de liaison, fixement sur des moyens ( 17 ) de fixation de la traversée ( 4 ) vers l'extérieur, une broche ( 13 ) de commutation, guidée en étant mobile par le contact ( 9 ) glissant, étant prévue pour la mise en contact du contact ( 8 ) d'entrée, broche qui est entraînée par des moyens ( 25, 26 ) d'entraînement disposés dans le conducteur ( 14 ) de liaison.

11. Système ( 1 ) de sectionneur suivant l'une des revendications précédentes,
**caractérisé en ce que**, par au moins un arbre ( 21, 31 ) d'entraînement pour donner un mouvement d'entraînement dans le sectionneur ( 7 ), chaque arbre ( 21, 31 ) d'entraînement est monté dans des moyens ( 17 ) de fixation de la traversée ( 4 ) vers l'extérieur.

12. Système ( 1 ) de sectionneur suivant l'une des revendications précédentes,
**caractérisé par** un élément ( 20 ) oscillant, isolant, en matière isolante, pour obtenir un mouvement d'entraînement dans le sectionneur ( 7 ).

13. Système ( 1 ) de sectionneur suivant l'une des revendications précédentes,
**caractérisé par** des éléments ( 24 ) de commande de champ pour empêcher des décharges partielles dans la traversée ( 4 ) vers l'extérieur.

14. Système ( 1 ) de sectionneur suivant l'une des revendications précédentes,
**caractérisé par** un élément d'affichage pour afficher la position du sectionneur ( 7 ) et/ou de l'interrupteur ( 29 ) de mise à la terre.

15. Système ( 1 ) de sectionneur suivant l'une des revendications précédentes,
**caractérisé en ce qu'**au moins une traversée ( 4 ) vers l'extérieur est équipée d'un convertisseur ( 34 ) de courant.

16. Système ( 1 ) de sectionneur suivant l'une des revendications précédentes,
**caractérisé en ce qu'**au moins un groupe ( 32 ) d'entraînement appuyé sur la traversée ( 4 ) vers l'extérieur est prévu pour la production d'un mouvement d'entraînement.

17. Système ( 1 ) de sectionneur suivant l'une des revendications précédentes,
**caractérisé par** un convertisseur de tension.
